(19) Europäisches Patentamt
European Patent Office
Office européen des brevets

(11) **EP 0 991 215 B1**

(12) **FASCICULE DE BREVET EUROPEEN**

(45) Date de publication et mention
de la délivrance du brevet:
**16.03.2005 Bulletin 2005/11**

(51) Int Cl.⁷: **H04J 1/08**, H04B 7/15

(21) Numéro de dépôt: **99402376.0**

(22) Date de dépôt: **29.09.1999**

(54) **Système apériodique modulaire de réémission multicanaux numériques**

Aperiodisches modulares System zur Übertragungswiederholung mit mehreren digitalen Kanälen

Non-periodic modular system for retransmission with digital multi-channel

(84) Etats contractants désignés:
**AT BE CH CY DE DK ES FI FR GB GR IE IT LI LU
MC NL PT SE**
Etats d'extension désignés:
**RO SI**

(30) Priorité: **01.10.1998 FR 9812298**

(43) Date de publication de la demande:
**05.04.2000 Bulletin 2000/14**

(73) Titulaire: **TELEDIFFUSION DE FRANCE
75015 Paris (FR)**

(72) Inventeurs:
• **Depriester, Jean-Jacques
57150 Creutzwald (FR)**
• **Noirot, François
57150 Creutzwald (FR)**
• **Fiderspil, Gérard, c/o Télédiffusion de France
75015 Paris (FR)**

(74) Mandataire: **Fréchède, Michel
Cabinet Plasseraud
84, rue d'Amsterdam
75440 Paris Cédex 09 (FR)**

(56) Documents cités:
**EP-A- 0 255 972**

## Description

L'invention concerne un système apériodique modulaire de réémission multicanaux numériques Des systèmes de l'art antérieur sont connus par EP-A-0 255 972, ce document expose un procédé pour coupler une pluralité d'émetteurs fonctionnant avec différentes fréquences porteuses à une antenne.

Avec l'avènement prochain de la télédiffusion de la télévision numérique par réseau hertzien terrestre, il est impératif de mener des investigations poussées sur l'ingénierie des sites d'émission ou de réémission et sur l'architecture des équipements de diffusion, par émission ou réémission, qui devront permettre de satisfaire aux contraintes, tant actuelles que futures, en termes de zone de couverture et de qualité de diffusion.

Les sites concernés par ces développements sont, d'une part, ceux du réseau principal de diffusion T'*i* analogique de forte puissance, de 250 W à 25 kW, et, d'autre part, ceux du réseau complémentaire de faible puissance, comprise entre 0,05 W et 25 W.

Les sites du réseau principal desservent, en France, 80% environ de la population, alors que ceux du réseau complémentaire couvrent le pourcentage restant, dont les 80% concernent les classes de puissance d'émission comprise entre 1 W à 25 W.

Outre les contraintes de puissances précitées, les plans de fréquences d'émission ou de réémission attribués, actuellement, au réseau complémentaire analogique, sont tels qu'il est nécessaire d'utiliser tous les sites concernés pour assurer une zone de couverture identique en émission ou réémission numérique.

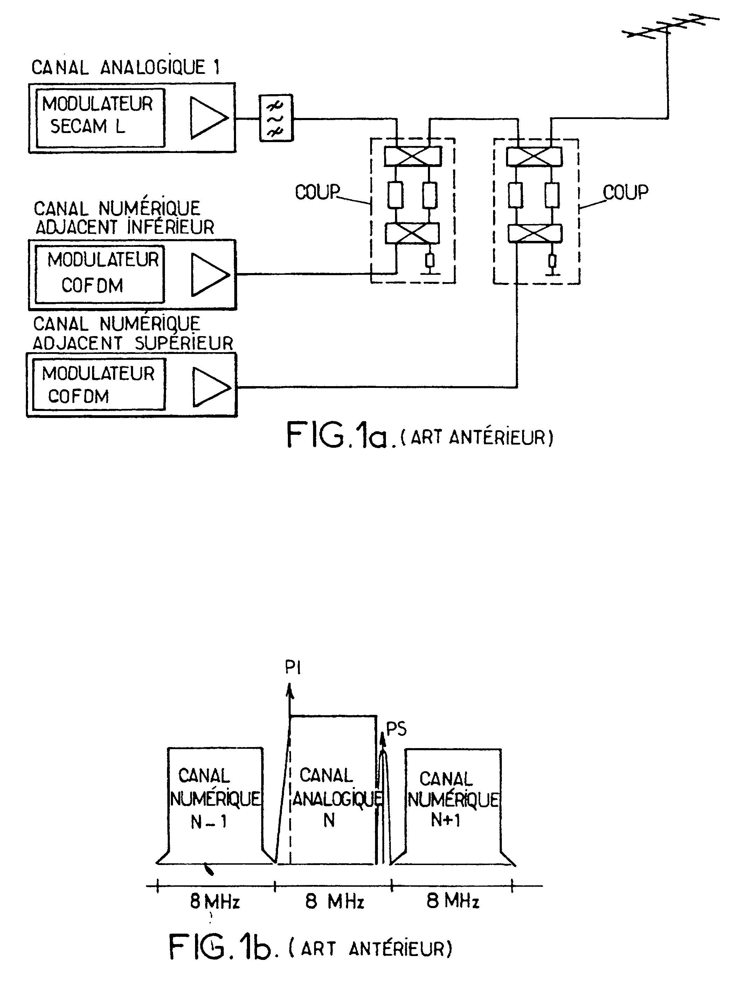

En ce qui concerne, à l'heure actuelle, la mise en oeuvre d'une émission ou réémission numérique sur les sites d'émission/réémission de forte puissance du réseau principal, la solution technique actuellement utilisée, en cours d'expérimentation, consiste, ainsi que représenté de manière illustrative en figures 1a et 1b, en un couplage d'un canal numérique DVB-T en canal adjacent inférieur et/ou supérieur à un canal analogique L-SECAM existant. Ainsi que représenté, en conséquence, en figures 1a et 1b, pour un canal analogique d'onde porteuse de fréquence centrale Fo donnée et de largeur de bande égale à 8 MHz, constituant le canal analogique N, le canal numérique supérieur, N+1, occupe une fréquence centrale Fo + 8 MHz et une bande de fréquences de largeur de bande ≤ 8 MHz, typiquement égale à 7,6 MHz, alors que le canal numérique inférieur, N-1, occupe une fréquence centrale Fo-8 MHz et une bande de fréquences de même largeur de bande ≤ 8 MHz, typiquement égale à 7,6 MHz. Sur la figure 1b, PS désigne la porteuse son et PI la porteuse image du canal analogique. Dans ces conditions, en raison notamment du niveau de puissance plus faible, de l'ordre de -10 dB, des signaux véhiculés par les canaux numériques inférieur et supérieur, vis-à-vis du niveau de puissance des signaux véhiculés par le canal analogique central, il est en conséquence possible de procéder à une allocation de ces fréquences canal analogique central, canaux numériques adjacents supérieur et inférieur, en optimisant au mieux le plan d'allocation des fréquences précitées, du fait même du caractère adjacent de ces canaux.

En contre partie, le couplage entre canal analogique central et canaux adjacents numériques doit être extrêmement sélectif à l'extérieur des bandes de fréquences allouées, afin d'éviter tout risque de recouvrement des bandes de fréquences précitées et, en conséquence, tout risque d'interférence ou de brouillage entre canaux adjacents. Pour cette raison, ainsi que représenté en figure la, les dispositifs de couplage utilisés, désignés par COUP, pour assurer le couplage précité, sont impérativement très sélectifs. On utilise à cet effet des coupleurs ou multiplexeurs analogiques à filtres de cavités, en raison même des niveaux de puissance mis en jeu, tant par le canal analogique central que par les canaux numériques adjacents. Ces coupleurs ou multiplexeurs analogiques, en raison de leur structure à filtres de cavités, sont dits périodiques, en raison de leur sélectivité en fréquence, et donc en période, sur l'onde porteuse du canal analogique.

La transformation pure et simple de l'architecture précitée pour le développement de systèmes de réémission multicanaux numériques sur des sites du réseau complémentaire ne peut être valablement réalisée, en raison de la difficulté réelle de mise en oeuvre des multiplexeurs analogiques à filtres de cavités, lesquels nécessitent des réglages très précis que seul l'opérateur propriétaire et/ou gestionnaire du réseau de télédiffusion est à même de réaliser.

Outre la difficulté réelle précitée, en référence à la figure la, il est manifeste que l'insertion d'un nombre de canaux numériques, et en conséquence de coupleurs ou multiplexeurs à filtres de cavités, supérieur à deux sur la ligne reliant le canal analogique à l'antenne d'émission ou de réémission, rend le réglage de l'ensemble encore plus délicat, en raison de l'interaction réciproque non nulle de ces coupleurs, et en définitive de la dégradation inévitable du signal véhiculé par le canal analogique qui en résulte.

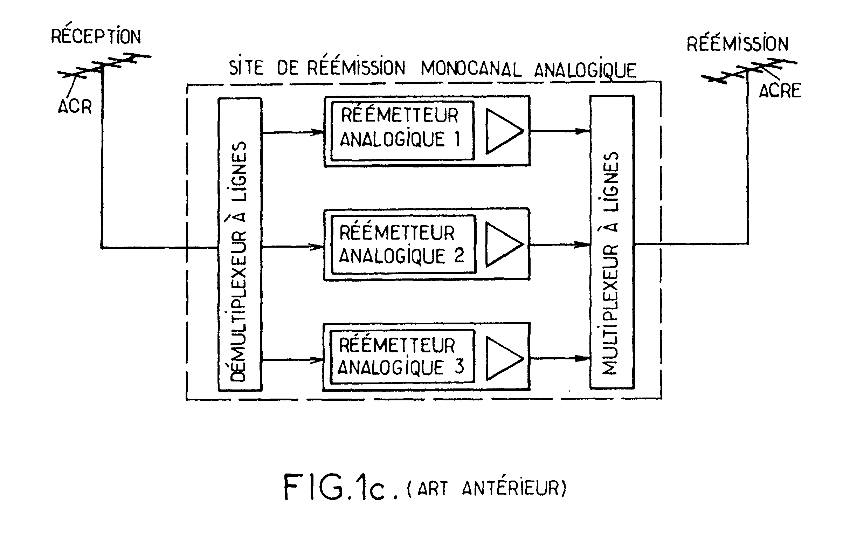

Enfin, en référence à la figure 1c, les sites de réémission des réseaux complémentaires analogiques, ces derniers ayant pour objet d'assurer les extensions nécessaires de couverture afin de desservir convenablement les zones à faible densité de population ou masquées par le relief, sont le plus souvent desservis à partir des sites principaux ou constituent parfois des sites de réémission mis eux-mêmes en cascade.

A l'heure actuelle, les équipements de diffusion des sites de réémission du réseau complémentaire analogique sont, ainsi que représenté en figure 1c, de type monocanal et desservent le plus souvent un triplet de programmes TV, un programme par canal analogique. Ces équipements fonctionnent sur le principe de la réception à partir d'une antenne commune de réception, ACR, des programmes émis depuis le site principal, transformation des ondes porteuses, par changement de fréquence en fonction d'un plan de fréquence de réémission et réémission selon le plan de fréquence précité, à partir d'une antenne commune de réémission désignée par ACRE.

De même que dans le cas des sites d'émission ou de réémission des réseaux principaux à partir d'un canal numérique adjacent supérieur et inférieur, ainsi que décrit précédemment, le couplage des canaux analogiques des sites de réémission des réseaux complémentaires nécessitent, en raison du caractère analogique de ces canaux, la mise en oeuvre de coupleurs ou multiplexeurs à lignes et/ou à filtres, et donc de coupleurs périodiques. Cette technique s'est ainsi généralisée suite à l'apparition, au fil des années, de nouveaux canaux TV analogiques pour lesquels il a été nécessaire d'appliquer ces coupleurs sélectifs, périodiques, afin d'assurer un couplage convenable en l'absence de dégradation mutuelle des signaux véhiculés par les canaux analogiques.

Ce type de coupleur périodique présente bien entendu les mêmes inconvénients que les coupleurs périodiques utilisés dans les sites d'émission ou de réémission des réseaux principaux à partir d'un canal numérique adjacent supérieur et inférieur.

Il en est de même pour ce qui concerne leur multiplication.

La présente invention a pour objet la mise en oeuvre d'un système apériodique modulaire de réémission multicanaux numériques, dans lequel la multiplication des coupleurs périodiques est supprimée.

Un autre objet de la présente invention est également la mise en oeuvre d'un système apériodique modulaire de réémission multicanaux numériques, permettant de réutiliser les infrastructures des sites de réémission des réseaux complémentaires et en particulier de conserver sensiblement les diagrammes et zones de couverture de ces derniers.

Un autre objet de la présente invention est également la mise en oeuvre d'un système apériodique modulaire de réémission multicanaux numériques n'introduisant qu'une perturbation minime des zones de couverture des diagrammes de rayonnement des sites de réémission analogique des réseaux complémentaires existants, auxquels tout système apériodique est associé.

Un autre objet de la présente invention est, enfin, la mise en oeuvre d'un système apériodique modulaire de réémission multicanaux numériques, lequel, en raison du caractère de modularité de ce dernier, permet une couverture sélective ponctuelle évolutive d'une bande de fréquences allouée à un ensemble de canaux analogiques et/ou numériques conformément à un plan de fréquences déterminé.

Le système apériodique modulaire de réémission multicanaux numériques, objet de la présente invention, est installé sur un site de réémission monocanal analogique, comportant une antenne de réception connectée à un démultiplexeur, un premier, un deuxième et un troisième réémetteur analogique, un multiplexeur connecté à une antenne de réémission, le premier, le deuxième et le troisième réémetteur analogique étant connectés en parallèle entre le démultiplexeur et le multiplexeur.

Il est remarquable en ce qu'il comporte, un circuit répartiteur multivoies à large bande, inséré entre l'antenne de réception et le démultiplexeur, l'une des voies de sortie du répartiteur multivoies étant connectée en entrée du multiplexeur, au moins une voie de canal numérique, l'entrée de chacune des voies de traitement étant connectée à une voie de sortie du répartiteur multivoies, un circuit sommateur multivoies à large bande, une au moins des voies d'entrée du circuit sommateur multivoies étant connectée à la sortie d'une des voies de traitement de canal numérique. Un circuit amplificateur de puissance à large bande est en outre prévu, l'entrée de ce circuit amplificateur de puissance étant connectée en sortie du circuit sommateur multivoies à large bande et un coupleur directionnel à une entrée de couplage et une sortie est inséré entre la sortie du multiplexeur à lignes et l'antenne de réémission, l'entrée de couplage de ce coupleur directionnel étant connectée à la sortie du circuit amplificateur de puissance.

Le système apériodique modulaire de réémission multicanaux numériques, objet de la présente invention, peut être mis en oeuvre et utilisé dans le domaine de la télédiffusion de télévision numérique, afin de permettre une configuration et une évolution très souples, par déploiement modulaire, des réseaux analogiques existants.

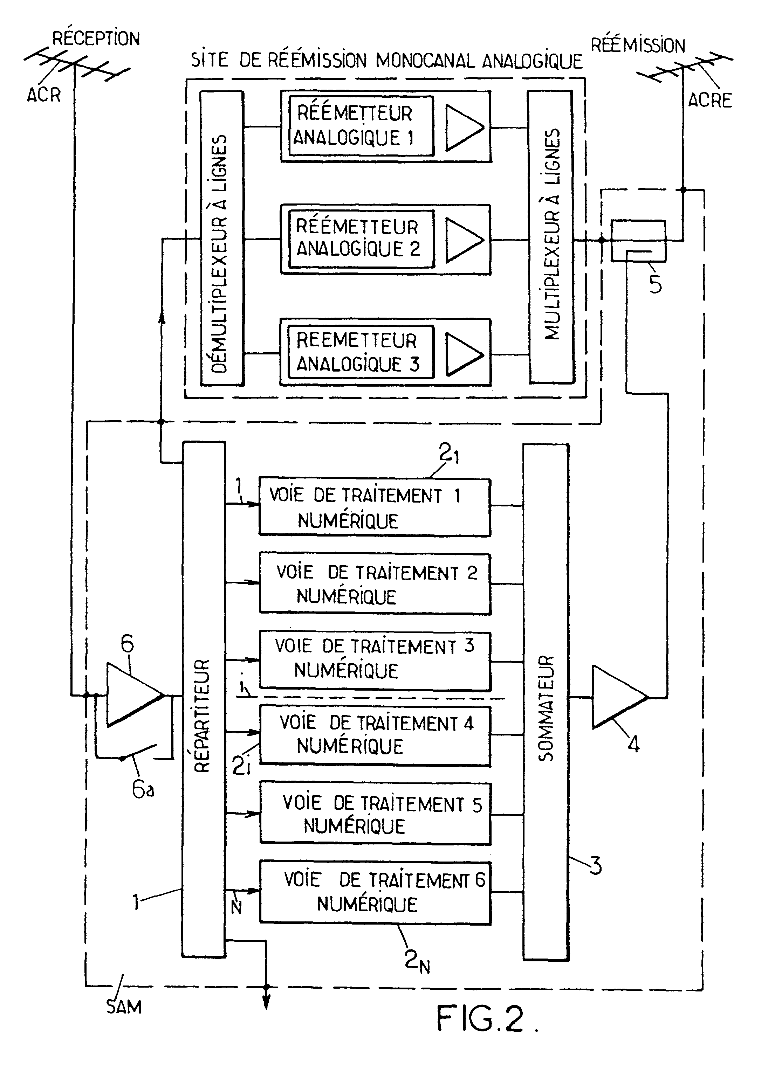

Il sera mieux compris à la lecture de la description et à l'observation des dessins ci-après dans lesquels, outre les figures 1a, 1b et 1c relatives à l'art antérieur, la figure 2 représente un schéma synoptique du système apériodique modulaire de réémission multicanaux numériques, objet de la présente invention.

Une description plus détaillée du système apériodisque modulaire de réémission multicanaux numériques, référencé SAM, objet de la présente invention, sera maintenant donnée en liaison avec la figure 2 et avec la figure 1c relative à un site de réémission monocanal analogique.

D'une manière générale, on indique que le système apériodique modulaire de réémission multicanaux numériques, objet de la présente invention, est destiné à être installé sur un site de réémission monocanal analogique existant, tel que représenté en figure 1c par exemple. On rappelle que, de manière classique, ces sites de réémission sont installés sur le réseau complémentaire afin de permettre la réémission de programmes et les diffuser à partir d'une antenne de réception ACR et d'une antenne de réémission ACRE. Sur la figure 1c, les antennes précitées sont représentées de manière non limitative sous forme d'antennes de type *YAGI*. L'antenne de réception ACR est connectée à un démultiplexeur à lignes alors que l'antenne de réémission ACRE est connectée à un multiplexeur à lignes de même type. Un premier, un deuxième et un troisième réémetteur analogique sont connectés entre le démultiplexeur et le multiplexeur à lignes de type périodique.

Ainsi que représenté en figure 2, le système, objet de la présente invention, comprend un circuit 1 répartiteur multivoies à large bande, lequel est inséré entre l'antenne de réception ACR et le démultiplexeur à lignes du site de réémission monocanal analogique. L'une des voies de sortie du répartiteur multivoies est connectée en entrée du multiplexeur à lignes précité.

En outre, ainsi que représenté sur la figure 2 précitée, le système comporte au moins une voie de traitement de canal numérique, notée $2_1$, $2_i$ à $2_N$, l'entrée de chacune des voies de traitement précitées étant connectée à une voie de sortie du répartiteur multivoies.

Sur la figure 2, on a représenté un nombre déterminé de voies de manière non limitative. On comprend en particulier que le nombre de voies de traitement de canal numérique peut être limité à 1, 2 ou plusieurs en fonction des besoins d'exploitation du réseau de télédiffusion et de l'évolution en matière de densité de population et/ou de nombre programmes télédiffusés à transmettre.

En outre, un circuit 3 sommateur multivoies à large bande est prévu, l'une au moins des voies d'entrée de ce circuit sommateur multivoies étant connectée à la sortie d'une des voies de traitement de canal numérique.

Le circuit 3 sommateur multivoies est complété par un circuit 4 amplificateur de puissance à large bande dont l'entrée est connectée en sortie du circuit sommateur 3 multivoies à large bande.

Enfin, un coupleur directionnel à une entrée de transmission, une entrée de couplage et une sortie, est inséré entre la sortie du multiplexeur à lignes du site de réémission monocanal analogique et l'antenne de réémission ACRE. Ainsi que représenté sur la figure 2 précitée, l'entrée de couplage du coupleur directionnel est connectée à la sortie du circuit amplificateur de puissance 4, alors que l'entrée de transmission du coupleur directionnel 5 assure la liaison entre la sortie du site de réémission monocanal analogique, c'est-à-dire la sortie du multiplexeur à lignes et l'antenne commune de réémission ACRE.

Compte tenu de l'architecture du système apériodique modulaire de réémission multicanaux numériques, objet de la présente invention, on indique que celui-ci permet la retransmission de plusieurs programmes numériques, un programme par voie de traitement de canal numérique, à travers une voie commune d'amplification en puissance constituée par le circuit amplificateur de puissance 4.

Selon une autre caractéristique du système SAM, objet de la présente invention, on indique que le circuit 1 répartiteur multivoies et la chaîne constituée par le circuit 3 sommateur multivoies, le circuit 4 amplificateur de puissance et le coupleur 5 directionnel, sont des composants à large bande, lesquels, en l'absence de circuit sélectif en fréquence, et pour cette raison, présentent donc un caractère apériodique. En conséquence, l'architecture du système, objet de la présente invention, présente donc un caractère apériodique particulièrement remarquable, aucun réglage de circuit sélectif en fréquence ne devant de ce fait être effectué sur le site lui-même.

Au contraire, et conformément à un aspect particulièrement remarquable du système SAM, objet de la présente invention, la sélection en fréquences est réalisée uniquement par le choix de la fréquence centrale de chaque voie de traitement de canal numérique $2_1$ à $2_N$, et donc à l'initiative de l'opérateur de télédiffusion utilisateur, en fonction d'un seul plan de fréquences déterminé. De tels réglages de fréquence centrale peuvent bien entendu être simplement réalisés en atelier, chaque voie de traitement de canal $2_i$, après réglage approprié, pouvant alors être inséré entre le circuit répartiteur 1 et le circuit sommateur 3 sur le site considéré.

Le caractère apériodique et modulaire du système SAM, objet de la présente invention, confère ainsi une très grande souplesse de mise en oeuvre et d'utilisation et, finalement, de déploiement successif dans le temps en fonction des besoins de couverture du site considéré.

Dans un mode de réalisation préférentiel, on indique que le système SAM, objet de la présente invention, peut être agencé de façon que l'entrée du circuit répartiteur multivoies 1 soit connectée à l'antenne de réception ACR par l'intermédiaire d'un amplificateur radiofréquence 6 à faible bruit et d'un circuit by-pass connecté en parallèle sur cet amplificateur 6 et comportant un interrupteur 6a, permettant en fait la mise en fonctionnement respectivement la mise en court-circuit de l'amplificateur radiofréquence à faible bruit précité.

D'une manière pratique, on indique que l'amplificateur à faible bruit 6 peut être constitué par un amplificateur de gain 20 dB et d'un facteur de bruit de 2 dB typique, afin de permettre d'amplifier les signaux d'entrée de niveau de puissance se situant entre -67 dBm et -37 dBm, dans le but, non seulement de compenser les pertes engendrées par le circuit 1 répartiteur de signaux, mais également d'améliorer le rapport signal à bruit des signaux transmis par l'intermédiaire de ce circuit vers les voies analogiques et numériques.

Pour un facteur de bruit $f_2$ de l'une des voies analogiques et pour un facteur de bruit $f_1$ de l'ensemble constitué par l'amplificateur à faible bruit 6 et le circuit répartiteur 1, cet ensemble présentant en outre un gain $g_1$, le facteur de bruit résultant vérifie la relation :

$$F(dB) = 10.\log \frac{(f_1 + f_2)}{g_1}$$

Dans ces conditions, des essais ont pu montrer que le facteur de bruit équivalent de la cascade ainsi constituée par l'amplificateur à faible bruit et le circuit répartiteur se trouve amélioré de 4,5 dB alors que le rapport signal à bruit est amélioré de 10 dB environ.

En ce qui concerne le circuit by-pass 6a, on indique que celui-ci assure, en cas de défaillance de l'amplificateur à faible bruit 6, la continuité de service à moindre dégradation. En effet, en fonctionnement normal, le niveau de réception des signaux se situe nominalement centré dans une plage dont la dynamique peut supporter une chute de niveau radiofréquence équivalant à la perte de gain de l'amplificateur à faible bruit 6.

Chacune des voies de traitement de canal numérique $2_1$ assure le filtrage radiofréquence de canal, à la fréquence centrale de la porteuse $F_0$, la transposition et le filtrage en fréquence intermédiaire ainsi que la transposition et le filtrage vers un autre canal dont la fréquence porteuse est égale ou différente, en fonction du plan de fréquences retenu à l'émission.

Le circuit sommateur 3 et l'amplificateur 4 à large bande assurent le couplage et l'amplification commune de chacune des voies de traitement de canaux numériques. La puissance nominale de l'amplificateur à large bande 4 est définie de façon telle qu'il fonctionne en régime linéaire avec un recul de puissance suffisant pour garantir un niveau d'intermodulation répondant aux contraintes techniques usuelles.

D'une manière générale, les différents paramètres relatifs au nombre N de voies de traitement de canal numérique et de largeur de bande B du circuit répartiteur 1, du circuit sommateur 3 et de l'amplificateur de puissance 4 à large bande, seront donnés ci-après.

Pour une largeur de bande B du répartiteur multivoies 1, du circuit sommateur multivoies 3 et du circuit amplificateur de puissance à large bande 4, et pour une pluralité de voies de traitement de canal numérique $2_i$ de largeur de bande b, la fréquence centrale de l'onde porteuse de chacune des voies de traitement numérique et la largeur de bande b de ces dernières étant définies par l'opérateur de télédiffusion utilisateur en fonction des impératifs de plan de fréquences considéré, le nombre maximum N de voies de traitement de canal numérique du système SAM, objet de la présente invention, vérifie la relation :

$$N = B/b.$$

En outre, pour un nombre n de voies de traitement de canal numérique, ce nombre n étant au plus égal à N, le circuit amplificateur de puissance à large bande est de préférence constitué par un amplificateur en classe A présentant un recul de puissance Q dB par voie de traitement, vérifiant la relation :

$$N \times Q \text{ dB} < S \text{ dB}.$$

Dans cette relation, S désigne une valeur de seuil comprise entre 35 dB et 60 dB. Les paramètres de construction précédents permettent de garantir un niveau d'intermodulation entre voies de traitement de canal numérique $2_i$ inférieur à cette valeur de seuil.

On comprend en particulier que, en pratique, et dans un mode de réalisation industrielle, le recul de puissance global retenu pour le circuit amplificateur de puissance 4 est choisi pour le nombre N maximum de voies de traitement de canal numérique admissibles. Dans ces conditions, l'opérateur de télédiffusion utilisateur peut alors insérer un nombre quelconque de voies de traitement de canal numérique inférieur à N, en fonction des besoins réels et de déploiement nécessaires à la zone de couverture et au nombre de programmes à transmettre pour le site considéré.

Enfin, le coupleur directionnel 5 peut avantageusement être constitué par un coupleur directif à -6 dB. Ce coupleur assure le couplage des signaux numériques à l'antenne commune de réémission ACRE. Ce mode de couplage à l'antenne de réémission ACRE permet d'assurer une bonne isolation entre les signaux analogiques et numériques, avec un couplage inférieur à 30 dB, ce qui permet d'améliorer sensiblement le facteur de conversion des amplificateurs de sortie des voies analogiques et du circuit amplificateur 4 de puissance commun aux voies numériques. On rappelle que le facteur de conversion est une mesure de l'atténuation du produit d'intermodulation engendré par un amplificateur lorsque des signaux radiofréquence attaquent la sortie de ce dernier par l'intermédiaire d'un circuit multiplexeur ou d'un circuit de couplage tels que circuit multiplexeur des voies analogiques et circuit de couplage 5 du système SAM, objet de la présente invention.

Le système SAM, objet de l'invention précitée, permet d'assurer ainsi à la fois les performances requises en diffusion numérique et une transparence quasi totale de restitution des signaux analogiques d'origine.

La mise en oeuvre de dispositifs de couplage et de répartition passifs à large bande au niveau du circuit de répartition 1 et du circuit sommateur 3 confère au système SAM, objet de la présente invention, une simplification et une systématisation du mode d'installation en raison du caractère apériodique de ce dernier.

Une telle caractéristique permet en particulier de s'affranchir totalement de l'aspect plan de fréquence relatif à un site, aucune précaution particulière n'étant nécessaire pour le réglage de chaque voie de traitement de canal numérique, le développement ou le déploiement du réseau numérique pouvant ainsi être effectué selon une démarche technique identique pour chacune des voies.

En outre, en raison de la diminution du niveau de puissance de diffusion des programmes TV télédiffusés, en raison des améliorations technologiques apportées aux récepteurs TV et des caractéristiques spécifiques apportées par les signaux numériques, ces caractéristiques entraînant une diminution de la puissance émise sur les canaux numériques de l'ordre de 10 dB vis-à-vis des signaux de télédiffusion TV analogiques, la mise en oeuvre des circuits répartiteur 1 et sommateur 3 fait appel à des équipements de faible puissance pour lesquels aucune sélectivité particulière n'est nécessaire.

Enfin, le système SAM, objet de la présente invention, est particulièrement remarquable par le fait que l'insertion de ce dernier sur les sites de réémission monocanal analogique existants permet d'utiliser tant l'antenne de réception ACR que l'antenne de réémission ACRE de ces derniers, alors que l'infrastructure de la plupart de ces sites est très encombrée.

La mise en oeuvre d'un circuit amplificateur de puissance commun 4 permet de couvrir toutes les classes de puissances nécessaires au déploiement ou développement du réseau complémentaire.

## Revendications

1.  Système apériodique modulaire de réémission multicanaux numériques sur un site de réémission monocanal analogique comportant une antenne de réception connectée à un démultiplexeur, un premier, un deuxième et un troisième réémetteur analogique, un multiplexeur connecté à une antenne de réémission, le premier, le deuxième et le troisième réémetteur analogique étant connectés en parallèle entre le démultiplexeur et le multiplexeur, **caractérisé en ce que** ledit système comporte au moins :

    -   un circuit répartiteur multivoies (1) à large bande, inséré entre ladite antenne de réception et le démultiplexeur, l'une des voies de sortie dudit répartiteur multivoies étant connectée en entrée dudit multiplexeur ;
    -   au moins une voie de traitement de canal numérique (2i), l'entrée de chacune de ces voies de traitement étant connectée à une voie de sortie dudit répartiteur multivoies ;
    -   un circuit sommateur multivoies (3) à large bande, une au moins des voies d'entrée dudit circuit sommateur multivoies étant connectée à la sortie d'une des voies de traitement de canal numérique ;
    -   un circuit amplificateur (4) de puissance à large bande dont l'entrée est connectée en sortie dudit circuit sommateur multivoies à large bande ;
    -   un coupleur directionnel (5) à une entrée de transmission, une entrée de couplage et une sortie, inséré entre la sortie du multiplexeur à lignes et l'antenne de réémission, l'entrée de couplage étant connectée à la sortie dudit circuit amplificateur de puissance.

2.  Système selon la revendication 1, **caractérisé en ce que** l'entrée dudit circuit répartiteur multivoies est connecté à ladite antenne de réception par l'intermédiaire :

    -   d'un amplificateur radiofréquence à faible bruit (6) ;
    -   d'un circuit by-pass permettant la mise en fonctionnement, respectivement la mise en court-circuit (6a) dé l'amplificateur radiofréquence à faible bruit.

3.  Système selon la revendication 2, **caractérisé en ce que** ledit amplificateur radiofréquence à faible bruit présente un gain permettant de compenser les pertes d'insertion du circuit répartiteur multivoies sur le site de réémission monocanal analogique.

4.  Système selon l'une des revendications 1 à 3, **caractérisé en ce que**, pour une largeur de bande B du répartiteur multivoies, du circuit sommateur multivoies et du circuit amplificateur de puissance à large bande, et pour une pluralité de voies de traitement de canal numérique de largeur de bande b, le nombre maximum N de voies de traitement de canal numérique vérifie la relation

    $$N = B/b.$$

5.  Système selon l'une des revendications 1 à 4, **caractérisé en ce que**, pour un nombre n de voies de traitement de canal numérique, ledit circuit amplificateur de puissance à large bande est constitué par un amplificateur en classe A présentant un recul de puissance Q dB par voie de traitement vérifiant la relation :

    $$n \times Q \text{ dB} < S \text{ dB},$$

    S désignant une valeur de seuil compris entre 35 dB et 60 dB, ce qui permet de garantir un niveau d'intermodulation entre voies inférieur à cette valeur de seuil.

6.  Système selon l'une des revendications 1 à 5, **caractérisé en ce que** ledit coupleur directionnel est un coupleur directif à -6 dB.

## Claims

1.  A non-periodic modular system for digital multichannel rebroadcasting at an analogue monochannel rebroadasting site, comprising a receiving aerial connected to a demultiplexer, a first, a second and a third analogue translator, a multiplexer connected to a rebroadcasting aerial, the first, the second and the third analogue translator being connected in parallel between the demultiplexer and the multiplexer,
**characterised in that** the said system comprises at least:

- a wide-band multi-channel distributor circuit (1), inserted between the said receiving aerial and the demultiplexer, the one of the output channels of the said multi-channel distributor being connected at the input of the said multiplexer;
- at least one digital channel processing channel (2i), the input of each of these processing channels being connected to an output channel of the said multi-channel distribution frame;
- a wide-band multi-channel summing circuit (3), one at least of the said input channels of the said multipath summing circuit being connected to the output of one of the digital channel processing channels;
- a wide-band power amplifying circuit (4), the input of which is connected to the output of the said wide-band multi-channel summing circuit;
- a directional coupler (5) having a transmission input, a coupling input and an output, inserted between the output of the line multiplexer and the rebroadcasting aerial, the coupling input being connected to the output of the said power amplifying circuit.

2. A system according to Claim 1,
**characterised in that** the input of the said multi-channel distribution circuit is connected to the said receiving aerial by means of :

- a low-noise radiofrequency amplifier (6);
- a by-pass circuit allowing the operation, respectively the short-circuiting (6a), of the low-noise radiofrequency amplifier.

3. A system according to Claim 2,
**characterised in that** the said low-noise radiofrequency amplifier has a gain that allows the insertion losses of the multi-channel distributor circuit to be compensated for at the analogue mono-channel rebroadcasting site.

4. A system according to one of Claims 1 to 3,
**characterised in that** for a bandwidth B of the multi-channel distribution frame, of the multi-channel summing circuit and of the wide-band power amplifying circuit, and for a plurality of digital channel processing channels with bandwidth b, the maximum number N of digital channel processing channels verifies the relation:

$$N = B/b.$$

5. A system according to one of Claims 1 to 4,
**characterised in that** for a number n of digital channel processing channels, the said wide-band power amplifying circuit is formed by a Class A amplifier having a back-off Q db for each processing channel that verifies the relation:

$$n \times Q\ dB < S\ dB$$

in which S designates a threshold value of between 35 dB and 60 dB, which allows an intermodulation level between channels that is lower than this threshold value to be guaranteed.

6. A system according to one of Claims 1 to 5,
**characterised in that** the said directional coupler is a -6 dB directional coupler.


**Patentansprüche**

1. Aperiodisches modulares System zur Digital-Mehrkanal-Umsetzung in einer Analog-Einkanal-Umsetzstation, umfassend eine Empfangsantenne, die mit einem Demultiplexer verbunden ist, einen ersten, einen zweiten und einen dritten analogen Umsetzer, einen Multiplexer, der mit einer Neuausstrahlungsantenne verbunden ist, wobei der erste, der zweite und der dritte analoge Umsetzer zwischen dem Demultiplexer und dem Multiplexer parallel geschaltet sind, **dadurch gekennzeichnet, dass** das System mindestens umfasst:

- eine Mehrwege-Breitband-Verteilerschaltung (1), die zwischen die Empfangsantenne und den Demultiplexer eingesetzt ist, wobei einer der Ausgangswege dieses Mehrwege-Verteilers mit dem Eingang des Muliplexers verbunden ist;
- mindestens einen Digital-Kanal-Behandlungsweg (2i), wobei der Eingang jedes dieser Behandlungswege mit einem Ausgangsweg dieses Mehrwege-Verteilers verbunden ist;
- eine Breitband-Mehrwege-Summierschaltung (3), wobei mindestens einer der Eingangswege dieser Mehrwege-Summierschaltung mit dem Ausgang eines der Digital-Kanal-Behandlungswege verbunden ist;
- eine Breitband-Leistungsverstärkungsschaltung (4), deren Eingang mit dem Ausgang dieser Breitband- Mehrwege-Summierschaltung verbunden ist;
- einen Richtkoppler (5) mit einem Übertragungseingang, einem Kopplungseingang und einem Ausgang, der zwischen den Ausgang des Leitungsmultiplexers und die Neuausstrahlungsantenne eingesetzt ist, wobei der Kopplungseingang mit dem Ausgang dieser Leistungsverstärkungsschaltung verbunden ist.

2. System nach Anspruch 1, **dadurch gekennzeichnet, dass** der Eingang dieser Mehrwege-Verteilungsschaltung mit dieser Empfangsantenne verbunden ist über:

   - einen rauscharmen Funkfrequenzverstärker (6);
   - eine by-pass-Schaltung, die die Inbetriebsetzung bzw. die Kurzschließung (6a) des rauscharmen Funkfrequenzverstärkers gestattet.

3. System nach Anspruch 2, **dadurch gekennzeichnet, dass** der rauscharme Funkfrequenzverstärker einen Gewinn besitzt, der es gestattet, die Verluste der Einfügung der Mehrwege-Verteilungsschaltung in die Analog-Einkanal-Umsetzstation auszugleichen.

4. System nach einem der Ansprüche 1 bis 3, **dadurch gekennzeichnet, dass** die Höchstzahl N der Digital-Kanal-Behandlungswege bei einer Bandbreite B des Mehrwege-Verteilers, der Mehrwege-Summierschaltung und der Breitband-Leistungsverstärkungsschaltung und bei einer Vielzahl von Digital-Kanal-Behandlungswegen b die Gleichung erfüllt:

$$N = B/b.$$

5. System nach einem der Ansprüche 1 bis 4, **dadurch gekennzeichnet, dass** diese Breitband-Leistungsverstärkungsschaltung bei einer Anzahl n von Digital-Kanal-Behandlungswegen aus einem A-Klasse-Verstärker besteht, der einen Leistungsrücklauf Q dB pro Behandlungskanal aufweist, der die Gleichung erfüllt:

$$n \times Q \, dB < S \, dB,$$

worin S einen Schwellenwert zwischen 35 dB und 60 dB bezeichnet, was gestattet, einen Intermodulationspegel zwischen Wegen, der kleiner als dieser Schwellenwert ist, zu gewährleisten.

6. System nach einem der Ansprüche 1 bis 5, **dadurch gekennzeichnet, dass** der Richtkoppler ein gerichteter Koppler von -6 dB ist.

CANAL ANALOGIQUE 1

MODULATEUR
SECAM L

CANAL NUMÉRIQUE
ADJACENT INFÉRIEUR

MODULATEUR
COFDM

CANAL NUMÉRIQUE
ADJACENT SUPÉRIEUR

MODULATEUR
COFDM

COUP

COUP

FIG.1a.(ART ANTÉRIEUR)

PI

PS

CANAL
NUMÉRIQUE
N−1

CANAL
ANALOGIQUE
N

CANAL
NUMÉRIQUE
N+1

8 MHz       8 MHz       8 MHz

FIG.1b. (ART ANTÉRIEUR)

9

RÉCEPTION

ACR

SITE DE RÉÉMISSION MONOCANAL ANALOGIQUE

DÉMULTIPLEXEUR À LIGNES

RÉÉMETTEUR ANALOGIQUE 1

RÉÉMETTEUR ANALOGIQUE 2

RÉÉMETTEUR ANALOGIQUE 3

MULTIPLEXEUR À LIGNES

RÉÉMISSION

ACRE

FIG.1c. (ART ANTÉRIEUR)

EP 0 991 215 B1

FIG.2.